# EUROPEAN PATENT APPLICATION

(11) **EP 4 800 380 A1**
(43) Date of publication of application: **02.09.2026**
(21) Application number: 26158727.3
(22) Date of filing: 16.02.2026
(51) Int. Cl.: G01N 23/2209, G01N 23/2251

(54) **METHOD AND APPARATUS FOR ANALYSIS**

(30) Priority: 27.02.2025 JP 2025030242
(71) Applicant: Jeol Ltd., Akishima, Tokyo 196-8558 (JP)
(72) Inventor: KATO, Koki, Tokyo, 196-8558 (JP)
(74) Representative: Boult Wade Tennant LLP

(57) **Abstract**

There is provided a method of analysis capable of correcting X-ray spectra precisely. The method of analysis uses an analysis apparatus (100) equipped with a plurality of wavelength-dispersive X-ray spectroscopy (WDS) spectrometers (50a-50e). The method starts with producing an X-ray spectrum by spectrally dispersing X-rays by the first spectrometer (50a). The X-rays are spectrally dispersed by the second spectrometer (50b) and X-rays from a corrective element are detected out of the dispersed X-rays to obtain information about timewise variations of the intensity of the X-rays from the corrective element. The intensity of X-rays from an element under analysis within the X-ray spectrum is corrected based on the information about the timewise variations of the intensity of the X-rays from the corrective element. In the step of correcting the intensity of the X-rays from the element under analysis, information about the intensity of the X-rays from the corrective element detected at the same timing as the X-rays from the element under analysis is obtained from the information about the timewise variations of the intensity of the X-rays from the corrective element. The intensity of the X-rays from the element under analysis is corrected based on the information about the intensity of the X-rays from the corrective element detected at the same timing as the X-rays from the element under analysis.

## Description

### BACKGROUND OF THE INVENTION

### 1. Field of the Invention

The present invention relates to a method and apparatus for X-ray analysis and, more particularly, to a method and apparatus for WDS (wavelength-dispersive X-ray spectroscopy) analysis.

### 2. Description of the Related Art

A wavelength-dispersive X-ray spectrometer (WDS) performs elemental analysis by spectrally analyzing characteristic X-rays emanating from a sample. WDS is higher in energy resolution than an energy-dispersive X-ray spectrometer (EDS) and is capable of more precisely separating characteristic X-rays which are close to each other in energy. Furthermore, WDS is higher in S/N than EDS and thus can detect trace amounts of elements.

In WDS, X-rays of wavelengths (energies) corresponding to the position of an analyzing crystal are detected and so it is necessary to move the analyzing crystal a distance corresponding to the wavelength range to be measured while the sample is being irradiated with an electron beam. This makes it impossible for WDS to detect all elements simultaneously. Accordingly, during the period from start to end of a measurement, the state of the surface of the sample or its composition may vary.

For example, an amount of signal from carbon may increase due to a contaminant consisting chiefly of carbon. Furthermore, samples containing alkali metals (such as soda glass) and soft material samples (such as high molecules, biological membranes, and biological molecules) contain elements susceptible to electron beam damage. Therefore, elements which should be present are not detected or which are detected with lower concentrations than those occurring normally.

In the face of these problems, Patent document 1 discloses a method of quantitative analysis comprising the steps of: measuring the effect of the electron beam irradiation time taken to analyze carbon during qualitative analysis of steel on the intensity of detected X-rays, drawing a curve representative of the effect of the time of the analysis and measurement, registering the curve, performing a qualitative analysis of the steel, and quantitatively correcting the result of the quantitative analysis of the carbon with the energy spectral intensity obtained by the qualitative analysis according to the time required for the measurement and analysis of the carbon and on the basis of the previously registered curves representative of the effects of times of analysis and measurement.

### Citation List

### Patent Documents

Patent document 1: JP-A-2007-178445

As described previously, in the method disclosed in Patent document 1, the effect of the electron beam irradiation time taken to analyze carbon on the intensity of the detected X-rays is previously measured, a curve representative of the effect of the time for analysis and measurement is generated, and the results of the quantitative analysis are corrected with the generated curve representative of the effect of the time.

In actual measurements, however, the intensity of X-rays from carbon may not vary according to the previously generated curve representative of the effect of the time for analysis and measurement. Consequently, in this disclosed method, the results of quantitative analysis may not be precisely corrected.

### SUMMARY OF THE INVENTION

One aspect of the analysis method associated with the present invention is implemented using an analysis apparatus equipped with a plurality of wavelength-dispersive X-ray spectroscopy (WDS) spectrometers and comprises the steps of:
irradiating a sample with an electron beam to emit X-rays from the sample and spectrally dispersing the emitted X-rays by the use of at least a first one of the WDS spectrometers to produce an X-ray spectrum;
spectrally dispersing the first-mentioned X-rays emitted from the sample by the use of at least a second one of the WDS spectrometers, detecting therefrom X-rays originating from a corrective element, and obtaining information about timewise variations of the intensity of the X-rays from the corrective element; and
correcting the intensity of X-rays emanating from an element under analysis within the X-ray spectrum based on the information about the timewise variations of the intensity of the X-rays from the corrective element.

In the step of correcting the intensity of the X-rays emanating from the element under analysis, the information about the intensity of the X-rays from the corrective element detected at the same timing as the X-rays from the element under analysis is obtained from the information about the timewise variations of the intensity of the X-rays from the corrective element, and the intensity of the X-rays from the element under analysis is corrected based on the information about the intensity of X-rays from the corrective element detected at the same timing as the X-rays from the element under analysis.

In this analysis method, the intensity of the X-rays from the element under analysis is corrected based on the information about the intensity of the X-rays from the corrective element detected at the same timing as the X-rays from the element under analysis. Consequently, the intensity of the X-rays from the element under analysis can be corrected precisely.

One aspect of the analysis apparatus associated with the present invention includes: an electron optical system for irradiating a sample with an electron beam to emit X-rays from the sample; a plurality of wavelength-dispersive X-ray spectroscopy (WDS) spectrometers for spectrally dispersing the emitted X-rays into an X-ray spectrum; and a processor for correcting the intensity of X-rays from an element under analysis within the X-ray spectrum. The processor performs the steps of: producing the X-ray spectrum by spectrally dispersing the X-rays emitted from the sample by the use of at least a first one of the WDS spectrometers; obtaining information about timewise variations of the intensity of X-rays from a corrective element used for correction purposes by spectrally dispersing the X-rays emitted from the sample by the use of at least a second one of the WDS spectrometers and detecting therefrom X-rays originating from the corrective element; and correcting the intensity of the X-rays from the element under analysis based on the information about the timewise variations of the intensity of the X-rays from the corrective element. In the step of correcting the intensity of the X-rays from the element under analysis, information about the intensity of the X-rays from the corrective element detected at the same timing as the X-rays from the element under analysis is obtained from the formation about the timewise variations of the intensity of the X-rays from the corrective element, and the intensity of the X-rays from the element under analysis is corrected based on the information about the intensity of the X-rays from the corrective element detected at the same timing as the X-rays from the element under analysis.

In this analysis apparatus, the processor corrects the intensity of the X-rays from the element under analysis based on the information about the intensity of the X-rays from the corrective element detected at the same timing as the X-rays from the element under analysis. Consequently, the intensity of the X-rays from the element under analysis can be corrected precisely.

### BRIEF DESCRIPTION OF THE DRAWINGS

FIG. 1 is a vertical cross section partially in block form of an analysis apparatus according to the present invention.
FIG. 2 is a top view of the analysis apparatus of FIG. 1.
FIG. 3 is a ray diagram illustrating a method of producing a spectrum in WDS (wavelength-dispersive X-ray spectroscopy).
FIG. 4 illustrates a map analysis in WDS.
FIG. 5 illustrates a spectral imaging.
FIG. 6 is a flowchart illustrating one example of method for generating a spectral map.
FIG. 7 is a backscattered electron image (BEI) of a sample.
FIG. 8 is a graph showing timewise variations of the number of X-ray counts for carbon.
FIG. 9 illustrates the manner in which a carbon map varies with time.
FIG. 10 is a graph showing carbon rise curves through various regions.
FIG. 11 shows graphs illustrating a method of correcting a spectral map.
FIG. 12 is a flowchart illustrating one example of method of correcting X-ray intensities.
FIG. 13 illustrates a method of specifying a corrected region.
FIG. 14 is a flowchart illustrating one example of sequence of operations performed by a processor.
FIG. 15 is a graph showing one example of display of both an X-ray spectrum and a rise curve for carbon measured simultaneously with the X-ray spectrum.

### DETAILED DESCRIPTION OF THE INVENTION

The preferred embodiments of the present invention are hereinafter described in detail with reference to the drawings. It is to be understood that the embodiments provided below do not unduly restrict the scope and content of the present invention delineated by the appended claims and that not all the configurations described below are essential constituent components of the invention.

### 1. Analysis Apparatus

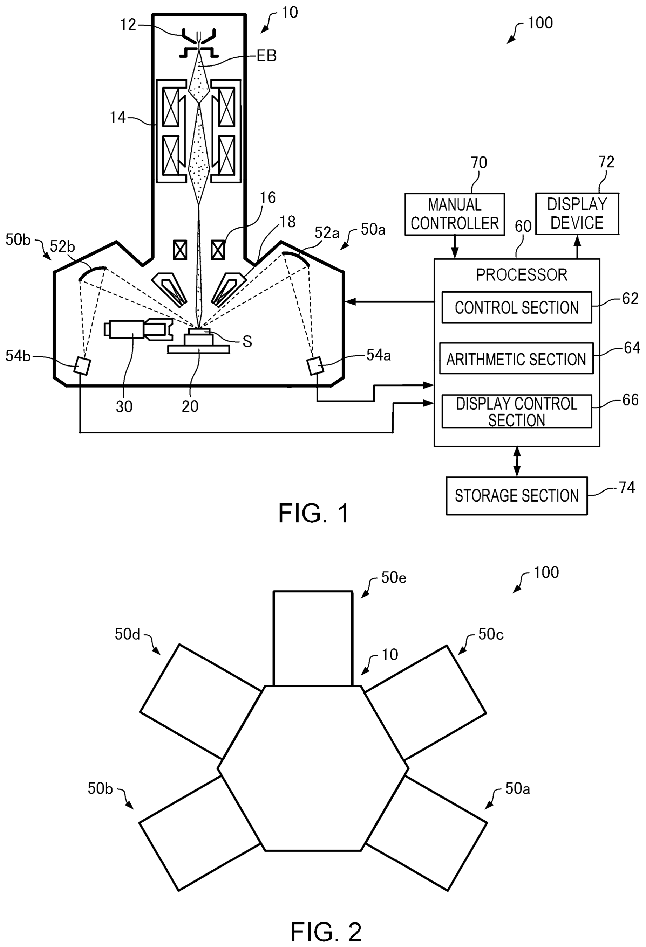

First, an analysis apparatus for use in an analysis method associated with one embodiment of the present invention is described by referring to FIGS. 1 and 2, which show one example of configuration of the analysis apparatus, 100, for use in the analysis method. The analysis apparatus 100 is a scanning electron microscope equipped with a plurality of WDS (wavelength-dispersive X-ray spectroscopy) spectrometers. The analysis apparatus 100 may also be an electron probe microanalyzer (EPMA) equipped with a plurality of WDS spectrometers.

As shown in FIGS. 1 and 2, the analysis apparatus 100 includes an electron optical system 10, a sample stage 20, an electron detector 30, first to fifth WDS spectrometers 50a, 50b, 50c, 50d, and 50e, respectively, a processor 60, a manual controller 70, a display device 72, and a storage section 74. Note that in FIG. 2, for the sake of convenience, only the electron optical system 10 and the five WDS spectrometers 50a-50e are shown.

The electron optical system 10 which emits an electron beam EB at a sample S includes an electron gun 12, condenser lenses 14, deflectors 16, and an objective lens 18. The electron gun 12 emits the electron beam EB towards the sample S by accelerating the electron beam EB by a given accelerating voltage.

The condenser lenses 14 focus the electron beam EB emitted from the electron gun 12. The deflectors 16 deflect the electron beam EB in two dimensions and can scan the beam EB over the sample S. The objective lens 18 focuses the electron beam EB onto the sample S. The condenser lenses 14 and the objective lens 18 cooperate to focus the electron beam EB, thus forming an electron probe.

The sample stage 20 on which the sample S is placed provides mechanical support of the sample S. The sample stage 20 is equipped with a drive mechanism (not shown) for moving the sample S. The electron beam EB can be scanned over the sample S, for example, by moving the sample S with the sample stage 20.

The electron detector 30 is used to detect electrons released from the sample S. A scanning electron microscope (SEM) image can be obtained by scanning the sample S with the electron beam EB and detecting the electrons released from the sample S with the electron detector 30. The electron detector 30 may be a backscattered electron detector for detecting backscattered electrons or a secondary electron detector for detecting secondary electrons. A backscattered electron image can be derived by detecting backscattered electrons with the electron detector 30. Also, a secondary electron image can be obtained by detecting secondary electrons with the electron detector 30.

The analysis apparatus 100 has the five WDS spectrometers 50a-50e, although there is no restriction on the number of WDS spectrometers equipped in the analysis apparatus 100.

The first WDS spectrometer 50a includes analyzer elements 52a and an X-ray detector 54a. In the first WDS spectrometer 50a, characteristic X-rays produced from the sample S are spectrally dispersed by the analyzer elements 52a and detected by the X-ray detector 54a.

For example, each analyzer element 52a is an analyzer crystal for performing spectral dispersion by making use of diffraction of X-rays. The first WDS spectrometer 50a is equipped with the plural first analyzer elements 52a which are different in crystal plane spacing. That is, the individual first analyzer elements 52a have different ranges of dispersion wavelengths. Examples of the material of the first analyzer elements 52 include PET (pentaerythritol), LiF (lithium fluoride), TAP (thallium acid phthalate), and STE (stearate). The X-ray detector 54a detects characteristic X-rays dispersed by the first analyzer elements 52a.

The first WDS spectrometer 50a has driving portions for moving the analyzer elements 52a and the X-ray detector 54a, for example, by means of electric motors. In this way, the analyzer elements 52a and the X-ray detector 54a can be placed into position. The first WDS spectrometer 50a is capable of detecting X-rays of wavelengths (energies) corresponding to the positions of the analyzer elements 52a.

As shown in FIG. 2, the analysis apparatus 100 is equipped with the first to fifth WDS spectrometers 50a-50e, respectively. The second to fifth WDS spectrometers 50b-50e are similar in configuration to the first WDS spectrometer 50a. The second WDS spectrometer 50b has a plurality of analyzer elements 52b (only one is shown) and an X-ray detector 54b. Similarly, each of the third to fifth WDS spectrometers 50c-50e has a plurality of analyzer elements and an X-ray detector in a manner not illustrated. Since the analysis apparatus 100 has the five WDS spectrometers, five measurements can be made at a time.

The manual controller 70 operates to acquire a control signal responsive to a user's manipulation and to send the signal to the processor 60. The manual controller 70 consists, for example, of buttons, keys, a touch panel display, a microphone, or the like.

The display device 72 displays images generated by the processor 60, and is typified by an LCD (liquid crystal display).

The storage section 74 stores programs and data permitting the processor 60 to perform various calculational operations and control operations. Furthermore, the storage section 74 is used as a working area for the processor 60. The storage section 74 comprises a RAM (random access memory), a ROM (read only memory), or a hard disk, for example.

The functions of the processor 60 can be implemented by executing programs stored in a hardware device such as various processors (e.g., CPU (central processing unit) and DSP (digital signal processor)). The processor 60 operates to control various parts of the analysis apparatus 100. For example, the processor 60 controls the electron optical system 10 and the first to fifth WDS spectrometers 50a-50e. Furthermore, the processor 60 operates to correct X-ray spectra. In addition, the processor 60 operates to display data for X-ray spectra and for corrections on the display device 72.

The processor 60 includes a control section 62 for controlling the various portions of the analysis apparatus 100, an arithmetic section 64 for performing processing to correct X-ray spectra, and a display control section 66 for displaying the X-ray spectra and also information about timewise variations of the intensities of X-rays for an element used for correction, it being noted that such an element for correction may hereinafter be referred to as the corrective element. The control section 62, the arithmetic section 64, and the display control section 66 will be described in detail below.

### 2. Operation of Analysis Apparatus

### 2.1. Point Analysis

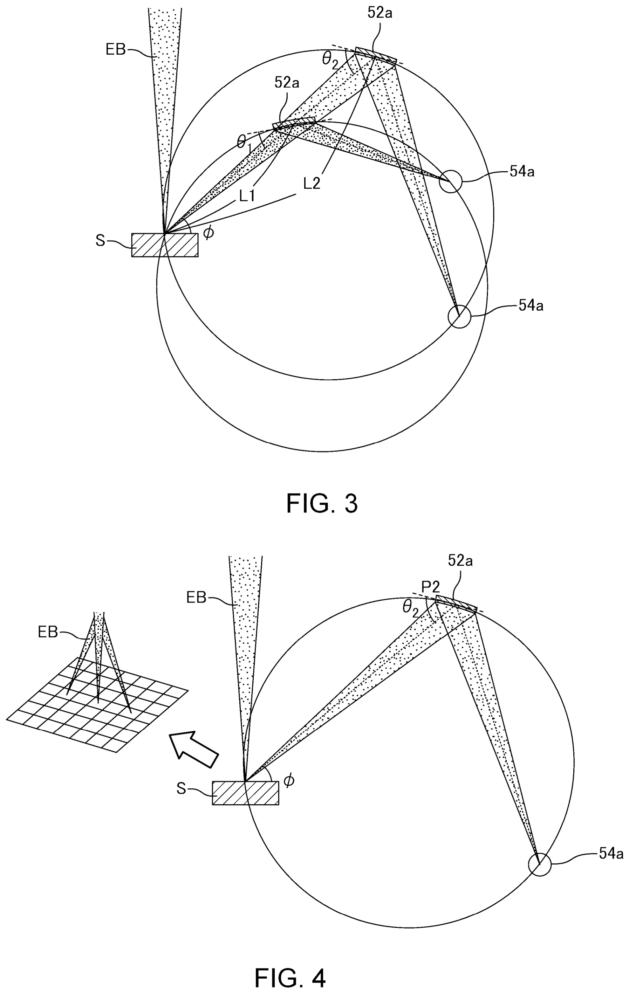

FIG. 3 illustrates a method of producing a spectrum with the first WDS spectrometer 50a. In this WDS spectrometer 50a, a point of analysis on the sample S (hit by an electron beam), the analyzer elements 52a, and the X-ray detector 54a are arranged on the circumference of a Rowland circle such that the focal condition satisfies the Bragg's law. Each analyzer element 52a moves on a straight line tilted through take-off angle ϕ from the point of analysis. As the analyzer element 52a moves, the X-ray detector 54a also moves. The distance between the point of analysis and the analyzer element 52a is equal to the distance between the analyzer element 52a and the X-ray detector 54a.

If the position of each analyzer element 52a (referred to as the first dispersion position) is varied while holding the position of the sample S (i.e., the position of the point of analysis) constant, the incident angle θ of X-rays relative to the analyzer element 52a varies. The first dispersion position is given by the distance between the sample S (point of analysis) and the analyzer element 52a.

In the example shown in FIG. 3, each analyzer element 52a is moved from the first dispersion position at which the sample S is at a distance of L1 from the analyzer element 52a to a second dispersion position at which the sample S is at a distance of L2 from the analyzer element 52a (L1 < L2). Consequently, the incident angle θ varies from θ₁ to θ₂ (θ₁ < θ₂).

According to the Bragg's law, as the incident angle θ is varied, the energy (wavelength) of X-rays detected by the X-ray detector 54a varies. Therefore, by holding the position of the sample S constant and varying the dispersion position, there can be obtained an X-ray spectrum whose horizontal axis is represented by energy (wavelength or the dispersion position) and whose vertical axis is represented by X-ray intensity.

### 2.2. Map Analysis (Surface Analysis)

FIG. 4 illustrates a map analysis performed by the first WDS spectrometer 50a. When a map data representing a distribution of the intensities of characteristic X-rays in a certain energy range emanating from a certain element is obtained, the electron beam EB is scanned over the sample S while holding the first dispersion position constant. At this time, each analyzer element 52a is held at the first dispersion position corresponding to the energy of characteristic X-rays to be analyzed. By scanning the electron beam EB over the sample S with the first dispersion position stationary in this way, information about X-ray intensity on each analysis point on the sample S can be obtained. Scanning of the sample S with the electron beam EB can be either beam scanning or stage scanning.

A map analysis permits acquisition of map data that associates positions on the sample S with the X-ray intensities in a certain energy range. In the map data, the coordinates (positions) of pixels correspond to the positions on the sample S. Information about X-ray intensities acquired from individual points is stored in respective pixels. Information about a distribution of the element can be obtained from a map data derived from the map analysis.

### 2.3. Spectral Imaging

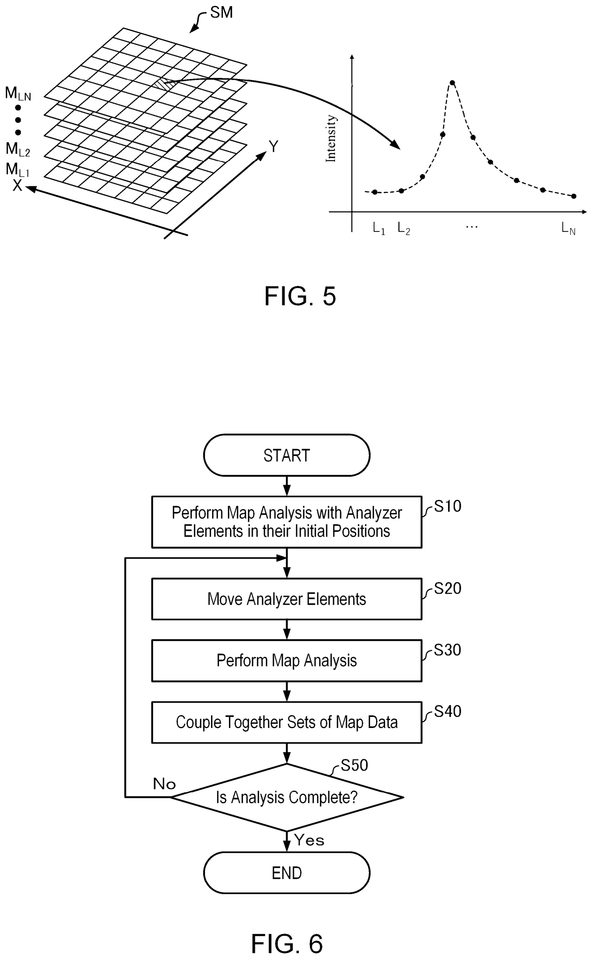

FIG. 5 illustrates spectral imaging. Spectral imaging is a technique for obtaining a spectral map SM which associates positions on the sample S with a spectrum.

In spectral imaging, the following set of operations is performed, for example. A map analysis is performed to acquire map data while holding the first dispersion position constant. The map analysis is repeated while varying the first dispersion position, thus obtaining a plurality sets of map data. The spectral map SM is created based on the obtained sets of map data.

FIG. 6 is a flowchart illustrating one example of method of acquiring the spectral map SM. First, a map analysis is performed on the sample S at the first dispersion position and map data M_{L1} is obtained (step S10).

In particular, a map analysis is performed on the sample S under the condition where the first dispersion position is fixed at dispersion position L₁. Consequently, the map data M_{L1} can be obtained. In the map data M_{L1}, the coordinates of each pixel are represented by X and Y coordinates. The intensity of X-rays of an energy corresponding to the dispersion position L₁ is measured at an analysis point corresponding to the coordinates of each pixel, and information about the measured intensity is stored in the respective pixel of the map data M_{L1}.

Then, the analyzer element 52a is moved a given distance (step S20). This varies the first dispersion position from the position L₁ to L₂. The position of the analyzer element 52a is varied, for example, in steps of equal intervals. That is, the space between the dispersion positions L₁ and L₂ is equal to the space between the dispersion positions L₂ and L₃. The steps in which the position of the analyzer element 52a is varied can be changed appropriately.

Then, a map analysis performed on the sample S at the dispersion position L₂ and map data M_{L2} is obtained (step S30).

More specifically, a map analysis is performed on the sample S while holding the first dispersion position at the dispersion position L₂. Thus, the map data M_{L2} can be derived. At each pixel given by the map data M_{L2}, there is stored information about the intensity of X-rays of an energy corresponding to the dispersion position L₂.

Then, the map data M_{L1} and the map data M_{L2} are combined into one set of data (step S40).

One set of map data is created by taking X-ray intensity information from respective pixels given by the map data M_{L1} and M_{L2}. Consequently, a spectral map can be generated.

In the pixels of the spectral map, there are stored spectral data including the X-ray intensities at the dispersion positions L₁ and L₂, respectively.

The step S20 for moving the analyzer elements 52a, the step S30 for performing a map analysis, and the step S40 for combining plural sets of map data are repeated to obtain multiple sets of map data M_{L3}, M_{L4}, ..., M_{LN}. When N sets of map data are obtained (Yes at step S50), the spectral imaging process is ended.

In the pixels making up the spectral map SM, the spectral data including information about the X-ray intensities at the N distinct dispersion positions L₁, L₂, ..., L_{N}, respectively, are stored as illustrated in FIG. 5. In the example illustrated in FIG. 5, the horizontal axis of the spectrum is represented by dispersion position. Alternatively, the horizontal axis of the spectrum may be represented by X-ray wavelength or energy.

The analysis apparatus 100 is equipped with the five WDS spectrometers and hence can produce five spectral maps SM simultaneously.

### 3. Analysis Method

### 3.1. Process Sequence of the Analysis

The analysis method associated with the present embodiment comprises the steps of: irradiating the sample S with the electron beam EB to emit X-rays from the sample S and spectrally dispersing the X-rays with the first WDS spectrometer 50a to produce a spectrum; spectrally dispersing the X-rays emitted from the sample S with the second WDS spectrometer 50b to produce X-rays from a corrective element, detecting the X-rays from the corrective element, measuring timewise variations of the intensity of the X-rays from the corrective element, and producing information about the timewise variations; and correcting the intensities of the X-rays from the element under analysis within the spectrum based on the information about the timewise variations of the intensities of the X-rays from the corrective element.

### 3.2. Acquisition of X-Ray Spectrum

In the method of analysis associated with the present embodiment, the sample S is irradiated with the electron beam EB. X-rays emitted from the sample S are spectrally dispersed using the first WDS spectrometer 50a, thus resulting in a spectrum. As an example, the analysis apparatus 100 can give rise to a spectrum by performing a point analysis using the first WDS spectrometer 50a. Furthermore, the analysis apparatus 100 can produce a spectrum by performing spectral imaging using the first WDS spectrometer 50a.

The WDS spectrometer used for acquisition of a spectrum is not restricted to the first WDS spectrometer 50a. Rather, any one of the second to fifth WDS spectrometers 50b-50e can be used. Also, a plurality of WDS spectrometers may be used to produce a spectrum.

### 3.3. Information about Timewise Variations of the Intensities of X-rays from Corrective Element

In the method of spectral dispersion associated with the present embodiment, the sample S is irradiated with the electron beam EB to emit X-rays from the sample S. The X-rays are spectrally dispersed using the second WDS spectrometer 50b, and X-rays from a corrective element are detected out of the dispersed X-rays. Information about timewise variations of the intensities of the X-rays from the corrective element is obtained.

If the second WDS spectrometer used for measurement for obtaining information about timewise variations of the intensities of X-rays from the corrective element is other than the first WDS spectrometer used to produce the above-described spectrum, no restrictions are imposed on the second WDS spectrometer. For example, where there are plural corrective elements, a plurality of WDS spectrometers may be used for this purpose.

The timewise variations of the intensities of the X-rays from the corrective element are measured simultaneously with the measurement for acquisition of a spectrum. For example, where a spectral map is generated by spectral imaging using the first WDS spectrometer 50a, the timewise variations of the intensities of the X-rays from the corrective element are measured by performing a map analysis using the second WDS spectrometer 50b simultaneously with spectral imaging using the first WDS spectrometer 50a.

For example, with the first WDS spectrometer 50a, a map analysis is performed to obtain map data while maintaining the positions of the analyzer elements 52a. This map analysis is repeated while varying the positions of the analyzer elements 52a. Thus, a plurality of sets of map data are derived. A spectral map is generated based on the sets of map data. With the second WDS spectrometer 50b, a map analysis is performed to obtain map data while positionally holding the first analyzer elements 52a. This map analysis is repeated to obtain a plurality of sets of map data. Data about timewise variations of the intensities of the X-rays from a corrective element is produced based on the sets of map data. Because the spectral imaging process by the first WDS spectrometer 50a and the map analysis by the second WDS spectrometer 50b are carried out simultaneously, the number of repetitions of the map analysis using the first WDS spectrometer 50a is equal to the number of repetitions of the map analysis using the second WDS spectrometer 50b. Measurement of timewise variations of the intensities of X-rays from a corrective element is hereinafter described for a case where the corrective element is carbon.

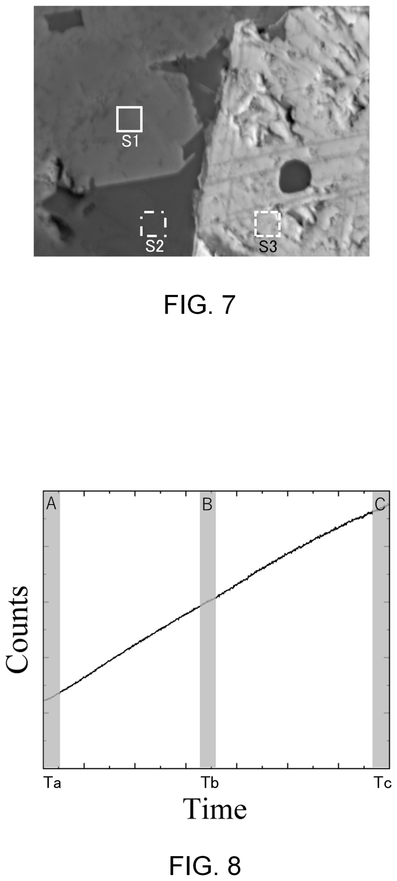

FIG. 7 shows one example of backscattered electron image of the sample S. It can be seen from this figure that the sample S has a plurality of phases. Timewise variations of the intensities of X-rays from carbon serving as a corrective element for the sample S are measured using the second WDS spectrometer 50b. A map analysis is performed under the condition where the analyzer elements 52b of the second WDS spectrometer 50b are fixed at positions permitting detection of the C-Kα rays.

FIG. 8 is a graph showing timewise variations of the number of X-ray counts (X-ray intensity) of carbon. FIG. 8 shows the result of a map analysis of the whole field of view on the sample S shown in FIG. 7. In FIG. 8, the number of X-ray counts (intensity) of X-rays are plotted on the vertical axis. Time in which X-rays are detected is plotted on the horizontal axis. The X-ray intensities measured with the map analysis are graphed.

As shown in FIG. 8, with the passage of the analysis time, the number of X-ray counts for carbon increases because contaminants chiefly consisting of carbon are accumulated on the sample S owing to electron beam irradiation. This carbon rise curve of FIG. 8 with respect to analysis time represents information about timewise variations of the intensities of the X-rays from a corrective element and is used for correction of a spectrum.

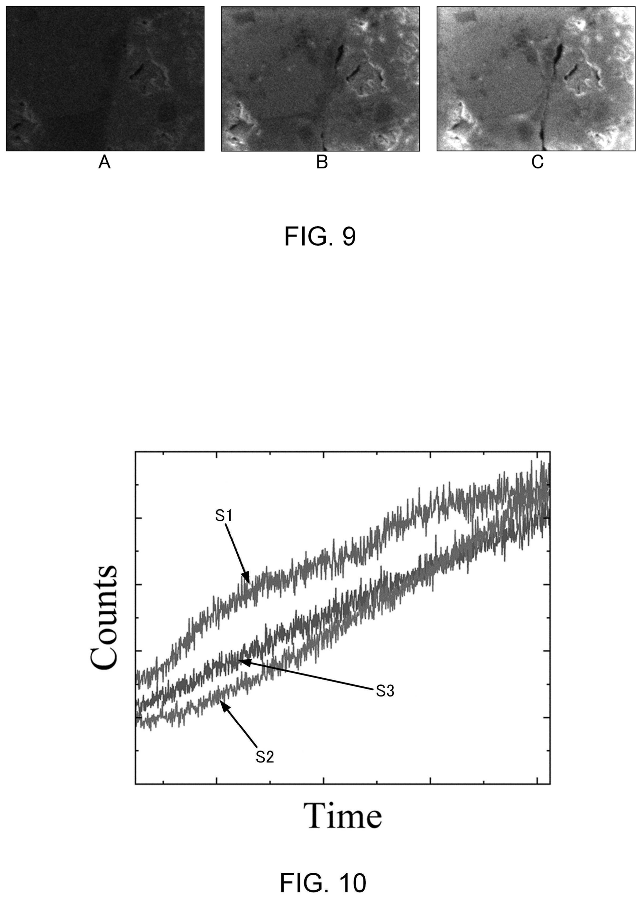

FIG. 9 illustrates the manner in which a carbon map varies with time. Map A shown in FIG. 9 is taken at time Ta in the graph of FIG. 8. Map B is taken at time Tb. Map C is taken at time Tc.

As shown in FIG. 9, map B is greater than map A in terms of number of X-ray counts. Map C is greater than map B in terms of number of X-ray counts for carbon. In this way, it can be seen from the result of map analysis illustrated in FIG. 9 that the number of X-ray counts for carbon increases with the passage of the analysis time. Furthermore, it can be seen that carbon shows a nonuniform intensity distribution.

FIG. 10 is a graph showing rise curves for carbon produced from regions S1, S2, and S3, respectively, shown in FIG. 7. As shown in FIG. 10, the amount of increase of the number of X-ray counts for carbon with respect to the analysis time is different for the different regions. Therefore, the rise curve for carbon differs for different regions. The rise curves for carbon for the different regions shown in FIG. 10 are used as information about timewise variations of the intensities of X-rays from a corrective element to correct spectra derived from the regions. For example, a spectrum produced from the region S1 of FIG. 10 is corrected using the rise curve for carbon in the region S1. Consequently, the spectrum can be corrected more precisely. Similarly, where a spectrum produced from the region S2 of FIG. 10 is corrected, the rise curve for carbon in the region S2 is used. Where a spectrum produced from the region S3 of FIG. 10 is corrected, the rise curve for carbon in the region S3 is used. In this way, information about timewise variations of the intensities of X-rays from the corrective element can be obtained for each region by performing a map analysis and measuring the timewise variations of the intensities of the X-rays from the corrective element.

### 3.4. Correction

In the method of analysis associated with the present embodiment, the intensities of X-rays from the element under analysis within a spectrum are corrected based on information about timewise variations of the intensities of the X-rays from the corrective element. In the step of correcting the intensities of the X-rays from the element under analysis, information about the intensities of the X-rays from the corrective element detected at the same timing as the X-rays from the element under analysis is obtained from the information about the timewise variations of the intensities of the X-rays from the corrective element. The intensities of the X-rays from the element under analysis are corrected based on the information about the intensities of the X-rays from the corrective element detected at the same timing as the X-rays from the element under analysis.

Correction of X-ray intensities includes a case where X-ray intensities represented either by the number of X-ray counts or by peak magnitudes in a spectrum are corrected, as well as a case where the concentration of an element under analysis is corrected, the concentration being calculated from X-ray intensities represented either by the number of X-ray counts or by peak magnitudes.

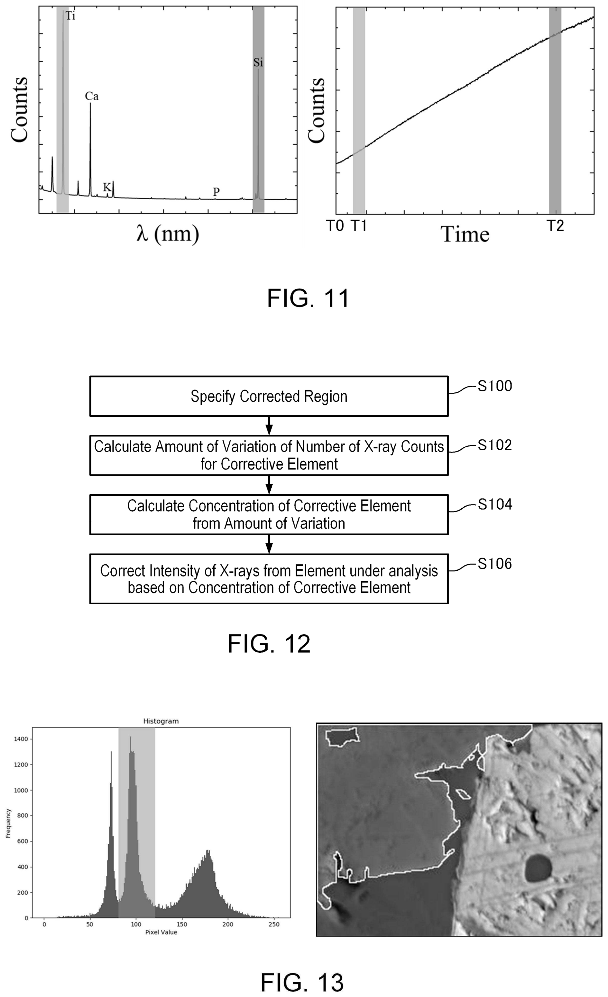

FIG. 11 illustrates a method of correcting a spectral map. One example of spectrum stored in a spectral map is shown in FIG. 11. Also, one example of rise curve for carbon is shown, the curve being measured simultaneously with spectral imaging.

A spectral map is obtained by performing the above-described spectral imaging process using the first WDS spectrometer 50a. That is, a map analysis of each wavelength is performed, and map data at each wavelength are combined together, thus creating a spectral map. At this time, in the first WDS spectrometer 50a, the analyzer elements 52a are moved from the shorter wavelength side to the longer wavelength side during a map analysis of each wavelength.

The rise curve of FIG. 11 for carbon has been derived by performing the above-described map analysis using the second WDS spectrometer 50b. That is, in the second WDS spectrometer 50b, X-rays from carbon has been detected while holding the positions of the analyzer elements 52b.

Measurements respectively for the spectral imaging process using the first WDS spectrometer 50a and the map analysis using the second WDS spectrometer 50b are carried out simultaneously. Therefore, wavelength on the horizontal axis of the spectrum and time on the horizontal axis of the graph representing timewise variations of the number of X-ray counts for carbon bear a one-to-one correspondence with each other. Accordingly, information about the intensities of X-rays from carbon when X-rays from an element under analysis are detected can be obtained from a rise curve for carbon.

For example, it is possible to know the number of X-ray counts for carbon when a peak from an element under analysis within a spectrum measured using the first WDS spectrometer 50a is detected from a rise curve for carbon. Therefore, the X-ray intensity (peak magnitude) of an element under analysis can be corrected using the number of X-ray counts for carbon, the number of X-ray counts for carbon being detected at the same timing as the peak of the element under analysis. That is, the degree of attenuation of the peak from the element under analysis caused by contamination due chiefly to carbon can be estimated.

For example, in the example shown in FIG. 11, the peak position of Ti in the spectrum corresponds to the time T1 in the graph where the number of X-ray counts for carbon is plotted against time. That is, the number of X-ray counts for carbon in time T1 gives an X-ray intensity for carbon detected at the same timing as X-rays from Ti. The peak position of Si corresponds to the time T2 in the graph where the number of X-ray counts for carbon is plotted against time. That is, the number of X-ray counts for carbon obtained at the time T2 gives the X-ray intensity for carbon, the intensity being detected at the same timing as the X-rays from Si. Since the number of X-ray counts for carbon at the time T2 is greater than the number of X-ray counts for carbon at the time T1, it can be estimated that the Si peak has attenuated more greatly than the Ti peak.

FIG. 12 is a flowchart illustrating one example of method of correcting X-ray intensities in a spectral map. In this case, the spectrum of FIG. 11 is corrected using the rise curve of FIG. 11 for carbon.

First, a region to be corrected on the sample S is specified (step S100). FIG. 13 illustrates a technique for specifying the region to be corrected.

As shown in FIG. 13, the region to be corrected can be specified by specifying a range of contrast values of a backscattered electron image. This facilitates specifying either a phase of a complex shape or phases at spaced intervals as a corrected region. The method of specifying a region to be corrected is not restricted to techniques using electron microscope images such as a backscattered electron image. For example, a region to be corrected may be specified by specifying a range of X-ray counts in an elemental map, for example, produced by a map analysis. Furthermore, a region may be specified by a user on an electron microscope image or elemental map by drawing a geometric figure of an arbitrary shape.

Then, the amount of variation from the initial value of X-ray count for carbon is calculated for each pixel in the corrected region (step S102). In the example shown in FIG. 11, the X-ray count for carbon at the time T0 in the graph is taken as the initial value. Upon detection of the element under analysis, the amount of variation of the X-ray count for carbon from the initial value is calculated. For example, where the element under analysis is Ti, the amount of variation in X-ray count for carbon during the period from time T0 to time T1 is calculated. As another example, where the element under analysis is Si, the amount of variation in X-ray count for carbon during the period from time T0 to time T2 is computed.

Then, the concentration of carbon when the element under analysis is detected is found based on the calculated amount of variation for carbon (step S104). The conversion from the amount of variation for carbon to the concentration of carbon may be done using either measurement data about a standard sample or a calibration curve for quantification stored in a database.

Then, the intensity of X-rays from the element under analysis is corrected based on information about the concentration of carbon upon the detection of the element under analysis (step S106).

In particular, assuming that a contaminant deposit consisting mainly of carbon adheres to the surface of the sample with a thickness proportional to the concentration of carbon, the amount of attenuation of the intensity of X-rays from the element under analysis is calculated from the information about the concentration of carbon taken when the element under analysis is detected. The amount of attenuation of the X-ray intensity corresponding to the thickness of the deposit may be calculated either from measurement data of a standard sample previously obtained or by a computer simulation. The thickness of the deposit is calculated from the concentration of carbon, and the amount of attenuation of the intensity of the X-rays from the element under analysis is calculated from the thickness of the deposit. As a result, the intensity of the X-rays from the element under analysis can be corrected.

Furthermore, the above-described correction is applied to various elements detected from within the region to be corrected, and quantitative calculations are performed. The composition of the sample in the corrected region can be computed by including the concentration of carbon contained in the sample (more specifically, the concentration of carbon taken at the measurement start time T0) in the results of the quantitative calculations. Because of the process steps described so far, the intensity of X-rays from the element under analysis can be corrected.

In the foregoing description, the X-ray count for the corrective element increases with the passage of time. Similar corrections can be made for a case where the X-ray count for the corrective element decreases with the passage of time.

Alkali metals, for example, are susceptible to electron beam damage and so, if a sample containing an alkali metal is measured by WDS, the alkali metal that should exist is not detected or detected with a lower concentration than when such an alkali metal exist. In the following description, the method of correction illustrated in FIG. 12 is applied to a case where the corrective element is sodium contained in the sample.

First, a region to be corrected is specified on the sample S (step S100). The amount of variation from the initial value of the X-ray count for sodium is calculated for each pixel within the corrected region (step S 102). Then, the concentration of sodium taken at the time of measurement of the element under analysis is found based on the calculated amount of variation for sodium (step S104).

It is here assumed that the abundance ratios of other elements within the corrected region have increased by an amount corresponding to the amount of decrease of the concentration of sodium. The intrinsic concentration of sodium can be calculated from the concentration of sodium taken at the measurement start time T0. Therefore, in the corrected region, the concentration of sodium contained in the sample is taken as the concentration of sodium occurring at the measurement start time T0. The concentrations of the other elements in the corrected region are corrected. Consequently, information about the composition of the corrected region can be obtained.

In the foregoing description, spectra in a spectral map are corrected. Spectra derived by a point analysis can be similarly corrected. Furthermore, in the above description, there is only one corrective element. It would be possible that a plurality of corrective elements exist, in which case the above-described correction may be applied to each of the corrective elements.

### 4. Processing of Processor

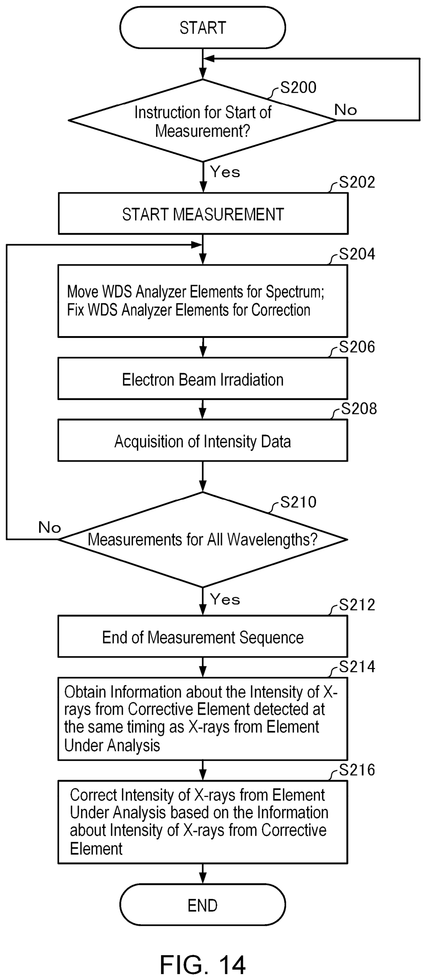

FIG. 14 is a flowchart illustrating one example of processing of the processor 60. The controller 62 makes a decision as to whether the user has issued an instruction to start a measurement of a spectrum (step S200). If the decision at step S200 is No, the controller waits. The controller 62 determines that the user has issued an instruction to start the measurement, for example, if the measurement start button is depressed or if an instruction to start the measurement has been entered from an input device or the like.

If the decision at step S200 is Yes, indicating that the controller 62 has determined that the user has given an instruction to start the measurement, the controller 62 starts the measurement to obtain a spectrum (step S202).

The controller 62 moves the analyzer elements 52a of the first WDS spectrometer 50a into positions where given wavelengths within the wavelength range of the spectrum can be detected, and holds the analyzer elements 52b of the second WDS spectrometer 50b at positions where X-rays from the corrective element can be detected (step S204).

Information about the wavelength range of the spectrum is previously stored in the storage section 74. The controller 62 moves the analyzer elements 52a of the first WDS spectrometer 50a into positions where X-rays of the shortest wavelength within the spectral wavelength range, for example, can be detected in the beginning. Furthermore, the controller 62 secures the analyzer elements 52b of the second WDS spectrometer 50b to the positions where X-rays from the corrective element can be detected based on the information about the corrective element specified by the user.

The controller 62 irradiates the sample S with the electron beam EB through the electron optical system 10 (step S206). Where a point analysis is performed, for example, the controller 62 causes the electron beam EB to hit specified a point of analysis on the sample S through the electron optical system 10. In addition, where a spectral imaging process is effected, for example, the controller 62 scans a specified region on the sample S with the electron beam EB through the electron optical system 10.

X-rays are emitted from the sample S in response to the irradiation of the sample S with the electron beam EB. The first WDS spectrometer 50a extracts the X-rays of a given wavelength from the X-rays emanating from the sample S by the use of the analyzer elements 52a. The extracted X-rays are detected by the X-ray detector 54a. At the same time, the second WDS spectrometer 50b causes X-rays from the corrective element to be extracted from the X-rays emanating from the sample S through the use of the analyzer elements 52b, and the extracted X-rays are detected by the X-ray detector 54b. Therefore, the first WDS spectrometer 50a outputs data about the intensity of X-rays of the given wavelength. Furthermore, the second WDS spectrometer 50b outputs data about the intensity of X-rays from the corrective element.

In this way, in the analysis apparatus 100, X-rays of the given wavelength for a spectrum are detected using the first WDS spectrometer 50a. X-rays from the corrective element are detected using the second WDS spectrometer 50b. Therefore, X-rays of the given wavelength for the spectrum and X-rays from the corrective element can be detected at the same time.

Data about the intensity of X-rays of the given wavelength is output from the first WDS spectrometer 50a and received by the arithmetic section 64. Also, data about the intensity of X-rays from the corrective element is output from the second WDS spectrometer 50b and received by the arithmetic section 64 (step S208).

The controller 62 makes a decision as to whether all the wavelengths within the wavelength range of the spectrum have been measured (step S210).

For example, the controller 62 obtains information about the longest wavelength within the wavelength range of the spectrum from the information about the wavelength range of the spectrum stored in the storage section 74 and compares the information about the longest wavelength and the given wavelength detected by the first WDS spectrometer 50a. If the given wavelength is equal to or longer than the longest wavelength within the wavelength range of the spectrum, the controller 62 determines that all the wavelengths have been measured.

If the decision at step S210 is No, i.e., the controller 62 has determined that not all the wavelengths have been measured, control returns to step S204, where the analyzer elements 52a of the first WDS spectrometer 50a are moved into positions where the given wavelength within the wavelength range of the spectrum can be detected. The analyzer elements 52b of the second WDS spectrometer 50b are held at the positions where X-rays from the corrective element can be detected (step S204).

The controller 62 moves the analyzer elements 52a of the first WDS spectrometer 50a, for example, over a preset given distance. Consequently, the wavelength of X-rays detected by the first WDS spectrometer 50a is varied by a value corresponding to the given distance. At this time, the controller 62 does not move the analyzer elements 52b of the second WDS spectrometer 50b. Thus, the analyzer elements 52b of the second WDS spectrometer 50b retain their positions at which X-rays from the corrective element can be detected.

The controller 62 irradiates the sample S with the electron beam EB through the electron optical system 10 (step S206). Data about the intensity of X-rays of a given wavelength is output from the first WDS spectrometer 50a and obtained by the arithmetic section 64. Also, the data about the intensity of X-rays from the corrective element is output from the second WDS spectrometer 50b and obtained by the arithmetic section 64 (step S208).

The controller 62 and the arithmetic section 64 repeat the processing of the steps S204, S206, S208, and S210 until it is determined that all the wavelengths within the wavelength range of the spectrum have been measured.

If the decision at step S210 is Yes, indicating that all the wavelengths have been measured, the controller 62 stops the irradiation of the sample S with the electron beam EB through the electron optical system 10 and ends the measurement process (step S212). As a result of the measurements, spectral data and information about timewise variations of the intensity of the X-rays from the corrective element can be obtained. For example, where a spectral imaging process is performed, a spectral map is obtained as spectral data.

The arithmetic section 64 corrects the intensity of the X-rays from the element under analysis within the spectrum, based on the information about the timewise variations of the intensity of X-rays from the corrective element. In particular, as already described in "3.4. Correction", the arithmetic section 64 obtains information about the intensity of the X-rays from the corrective element detected at the same timing as the X-rays from the element under analysis from the information about the timewise variations of the intensity of the X-rays from the corrective element (step S214). Then, the arithmetic section 64 corrects the intensity of the X-rays from the element under analysis based on the information about the intensity of the X-rays from the corrective element, the latter X-rays being detected at the same timing as the X-rays from the element under analysis (step S216). For example, the arithmetic section 64 makes a correction while treating all the elements detected by the first WDS spectrometer 50a as elements under analysis, and finds the composition of the sample S.

After correcting the spectrum, the processor 60 ends the process sequence. In the foregoing description, the processor 60 performs the process sequence starting from measurements and ending with correction. At least some steps of the process sequence may be manually done by the user.

### 5. Display

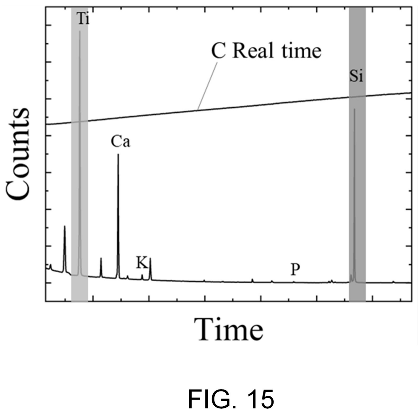

FIG. 15 shows one example of display of a spectrum and a rise curve for carbon, the curve being measured simultaneously with the spectrum.

As shown in FIG. 15, the spectrum and the carbon rise curve measured simultaneously with it are superimposed on top of each other and displayed on the display device 72 under control of the display control section 66. At this time, the horizontal axis is the time axis. Consequently, the peaks of various elements in the spectrum and the carbon-based X-ray intensity detected at the same timing as the peaks can be displayed in an easily understandable manner.

As shown in FIG. 11, the spectrum and the carbon rise curve measured simultaneously with the spectrum may be arranged juxtapositionally and displayed on the display device 72 under control of the display control section 66.

In addition, as shown in FIG. 13, the specified corrected region may be highlighted and displayed under control of the display control section 66. For example, on the sample image, lines that highlight the contour of the specified corrected regions may be drawn on the contour such that the boundaries of the corrected regions are highlighted and shown under control of the display control section 66 as shown in FIG. 13. Additionally, on the sample image, the specified corrected regions may be hatched or filled in in an unillustrated manner under control of the display control section 66.

### 6. Advantageous Effects

The method of analysis associated with the present embodiment comprises the steps of: irradiating the sample S with the electron beam EB to emit X-rays from the sample S and spectrally dispersing the X-rays with the first WDS spectrometer 50a to produce an X-ray spectrum; spectrally dispersing the first-mentioned X-rays emitted from the sample S with the second WDS spectrometer 50b, detecting therefrom X-rays originating from a corrective element, and obtaining information about timewise variations of the intensity of the X-rays from the corrective element; and correcting the intensity of the X-rays from an element under analysis within the X-ray spectrum based on the information about the timewise variations of the intensity of the X-rays from the corrective element. In the step of correcting the intensity of the X-rays from the element under analysis, information about the intensity of the X-rays from the corrective element detected at the same timing as the X-rays from the element under analysis is obtained from the information about the timewise variations of the intensity of the X-rays from the corrective element, and the intensity of the X-rays from the element under analysis is corrected based on the information about the intensity of the X-rays from the corrective element detected at the same timing as the X-rays from the element under analysis.

Therefore, in the method of analysis associated with the present embodiment, the intensity of X-rays from the element under analysis is corrected based on the information about the intensity of X-rays from the corrective element detected at the same timing as the X-rays from the element under analysis and so the intensity of the X-rays from the element under analysis can be corrected precisely.

For example, where the intensity of the X-rays from the element under analysis is corrected using the information about the previously measured timewise variations of the intensity of the X-rays from the corrective element, the intensity of the X-rays from the corrective element in actual measurements may not vary as anticipated from prior measurements. In contrast, in the method of analysis associated with the present embodiment, the intensity of the X-rays from the element under analysis can be corrected based on the information about the intensity of the X-rays from the corrective element detected at the same timing as the X-rays from the element under analysis and so the intensity of the X-rays from the element under analysis can be corrected precisely.

In the method of analysis associated with the present embodiment, the first WDS spectrometer 50a has the first analyzer elements 52a for spectrally dispersing X-rays. The second WDS spectrometer 50b has the second analyzer elements 52b for spectrally dispersing X-rays. In the step of producing an X-ray spectrum, the analyzer elements 52a are moved in the first WDS spectrometer 50a to detect X-rays of wavelengths corresponding to the positions of the first analyzer elements 52a. Thus, the X-ray spectrum is produced. In the step of obtaining information about timewise variations of the intensity of X-rays from the corrective element, the X-rays from the corrective element are detected while maintaining the positions of the analyzer elements 52b fixed in the second WDS spectrometer 50b. Thus, information about the resulting timewise variations of the intensity of the X-rays from the corrective element is obtained. Therefore, in the method of analysis associated with the present embodiment, an X-ray spectrum and timewise variations of the intensity of the X-rays from the corrective element can be measured simultaneously.

In the method of analysis associated with the present embodiment, the corrective element is carbon. In the step of correcting the intensity of the X-rays from the corrective element, attenuation of the intensity of the X-rays from the element under analysis due to carbon is corrected based on the information about the timewise variations of the intensity of the X-rays from carbon. Therefore, in the method of analysis associated with the present embodiment, the effects of contamination caused mainly by carbon can be corrected for.

In the method of analysis associated with the present embodiment, the corrective element is an alkali metal contained in the sample S. In the step of correcting the intensity of X-rays from the element under analysis, the concentration of the corrective element is found based on information about timewise variations of the intensity of the X-rays from the corrective element, and the concentration of the element under analysis is corrected based on the concentration of the corrective element. Therefore, in the method of analysis associated with the present embodiment, the composition of the sample containing the alkali metal can be analyzed precisely.

In the analysis apparatus 100, the processor 60 operates (i) to produce an X-ray spectrum by spectrally dispersing X-rays emitted from the sample S using the first WDS spectrometer 50a, (ii) to obtain information about timewise variations of the intensity of the X-rays from the corrective element by spectrally dispersing the X-rays emitted from the sample S using the second WDS spectrometer 50b and detecting therefrom X-rays originating from the corrective element, and (iii) to correct the intensity of the X-rays from the element under analysis based on the information about the timewise variations of the intensity of the X-rays from the corrective element. In the step of correcting the intensity of the X-rays from the element under analysis, information about the intensity of the X-rays from the corrective element detected at the same timing as the X-rays from the element under analysis is obtained from the information about the timewise variations of the intensity of the X-rays from the corrective element, and the intensity of the X-rays from the element under analysis is corrected based on the information about the intensity of the X-rays from the corrective element detected at the same timing as the X-rays from the element under analysis.

Therefore, in the analysis apparatus 100, the processor 60 corrects the intensity of the X-rays from the element under analysis based on the information about the intensity of the X-rays from the corrective element detected at the same timing as the X-rays from the element under analysis. Consequently, the intensity of the X-rays from the element under analysis can be corrected precisely.

In the analysis apparatus 100, in the step of producing an X-ray spectrum, the processor 60 controls the first WDS spectrometer 50a such that the analyzer elements 52a of the first WDS spectrometer 50a are moved and that X-rays of wavelengths corresponding to the positions of the analyzer elements 52a are detected. In the step of obtaining information about timewise variations of the intensity of the X-rays from the corrective element, the processor 60 controls the second WDS spectrometer 50b such that the positions of the analyzer elements 52b of the second WDS spectrometer 50b are held constant and that the X-rays from the corrective element are detected, whereby information about timewise variations of the intensity of the X-rays from the corrective element is obtained. Therefore, in the analysis apparatus 100, an X-ray spectrum and timewise variations of the intensity of the X-rays from the corrective element can be measured at the same time.

In the analysis apparatus 100, the corrective element is carbon. In the step of correcting the intensity of the X-rays from the element under analysis, the processor 60 corrects attenuation of the intensity of the X-rays from the element under analysis due to carbon, based on information about timewise variations of the intensity of the X-rays from the corrective element. Therefore, in the analysis apparatus 100, the effects of contaminants chiefly consisting of carbon can be corrected for.

In the analysis apparatus 100, the corrective element is an alkali metal contained in the sample S. In the step of correcting the intensity of the X-rays from the element under analysis, the processor 60 finds the concentration of the corrective element based on information about timewise variations of the intensity of the X-rays from the corrective element and corrects the concentration of the element under analysis based on the concentration of the corrective element. Therefore, in the analysis apparatus 100, the composition of the sample containing the alkali metal that decreases due to electron beam irradiation can be analyzed precisely.

### 7. Modifications

It is to be understood that the present invention is not restricted to the foregoing embodiment and that various modifications can be implemented without departing from the gist of the present invention.

For example, in the above embodiment, the processor 60 corrects spectra by the use of both a spectrum measured with the analysis apparatus 100 and information about timewise variations of the intensity of the X-rays from the corrective element. Alternatively, the processor 60 may correct spectra by the use of both a spectrum produced by other analysis apparatus and information about timewise variations of the intensity of the X-rays from the corrective element.

Furthermore, in the above embodiment, in the spectral imaging process as illustrated in FIG. 5, a map analysis is performed while maintaining the first dispersion position stationary. This map analysis is repeated while varying the first dispersion position, thus producing a plurality of sets of map data. The spectral map SM is created based on the sets of map data. The spectral imaging method is not restricted to this method. For example, a spectral map may be generated by performing a point analysis for obtaining a spectrum by varying the first dispersion position on the sample S for each point of analysis. The spectral map produced in this way can be corrected in the same way as in the above-described embodiment.

The present invention is not restricted to the foregoing embodiment but rather can be implemented in variously modified forms. For example, the present invention embraces configurations (e.g., configurations identical in function and method) which are substantially identical to the configurations described in the above embodiment. Furthermore, the invention embraces configurations which are similar to the configurations described in the above embodiment except that their nonessential portions have been replaced. Further, the invention embraces configurations which are similar to the configurations described in the above embodiment except that a well-known technique is added

## Claims

1. An analysis method using an analysis apparatus equipped with a plurality of wavelength-dispersive X-ray spectroscopy (WDS) spectrometers, said analysis method comprising the steps of:
irradiating a sample with an electron beam to emit X-rays from the sample and spectrally dispersing the emitted X-rays by the use of at least a first one of the WDS spectrometers to produce an X-ray spectrum;
spectrally dispersing the first-mentioned X-rays emitted from the sample by the use of at least a second one of the WDS spectrometers, detecting therefrom X-rays originating from a corrective element, and obtaining information about timewise variations of the intensity of the X-rays from the corrective element; and
correcting the intensity of X-rays emanating from an element under analysis within the X-ray spectrum based on the information about the timewise variations of the intensity of the X-rays from the corrective element;
wherein in the step of correcting the intensity of the X-rays emanating from the element under analysis, information about the intensity of the X-rays from the corrective element detected at the same timing as the X-rays from the element under analysis is obtained from the information about the timewise variations of the intensity of the X-rays from the corrective element, and the intensity of the X-rays from the element under analysis is corrected based on the information about the intensity of the X-rays from the corrective element detected at the same timing as the X-rays from the element under analysis.

2. An analysis method as set forth in claim 1,
wherein said first and second WDS spectrometers have first analyzer elements and second analyzer elements, respectively, for spectrally dispersing X-rays;
wherein in said step of producing an X-ray spectrum, the first analyzer elements are moved through the first WDS spectrometer and X-rays of wavelengths corresponding to the positions of the first analyzer elements are detected to produce the X-ray spectrum, and
wherein in said step of obtaining information about timewise variations of the intensity of the X-rays from the corrective element, the second analyzer elements in the second WDS spectrometer are fixed in position and the X-rays from the corrective element are detected, whereby the information about the timewise variations of the intensity of the X-rays from the corrective element is obtained.

3. An analysis method as set forth in claim 1 or 2, wherein in said step of producing an X-ray spectrum, there is obtained a spectral map in which the X-ray spectrum is stored in association with positions on said sample.

4. An analysis method as set forth in any one of claims 1 to 3, wherein said corrective element is carbon.

5. An analysis method as set forth in claim 4, wherein in said step of correcting the intensity of the X-rays from the element under analysis, attenuation of the intensity of X-rays from the element under analysis due to carbon is corrected based on information about the timewise variations of the intensity of the X-rays from the corrective element.

6. An analysis method as set forth in any one of claims 1 to 3, wherein said corrective element is an alkali metal contained in said sample.

7. An analysis method as set forth in claim 6, wherein in said step of correcting the intensity of the X-rays from the corrective element, the concentration of said corrective element is found based on information about timewise variations of the intensity of the X-rays from the corrective element and the concentration of the element under analysis is corrected based on the concentration of the corrective element.

8. An analysis apparatus comprising:
an electron optical system for irradiating a sample with an electron beam to emit X-rays from the sample;
a plurality of wavelength-dispersive X-ray spectroscopy (WDS) spectrometers for spectrally dispersing the emitted X-rays into an X-ray spectrum; and
a processor for correcting the intensity of X-rays from an element under analysis within the X-ray spectrum;
wherein the processor operates (i) to produce the X-ray spectrum by spectrally dispersing the X-rays emitted from the sample by the use of at least a first one of the WDS spectrometers, (ii) to obtain information about timewise variations of the intensity of X-rays from a corrective element by spectrally dispersing the X-rays emitted from the sample by the use of at least a second one of the WDS spectrometers and detecting therefrom X-rays originating from the corrective element, and (iii) to correct the intensity of the X-rays from the element under analysis based on the information about the timewise variations of the intensity of the X-rays from the corrective element; and
wherein in the step of correcting the intensity of the X-rays from the element under analysis, information about the intensity of the X-rays from the corrective element detected at the same timing as the X-rays from the element under analysis is obtained from the information about the timewise variations of the intensity of the X-rays from the corrective element, and the intensity of the X-rays from the element under analysis is corrected based on the information about the intensity of the X-rays from the corrective element detected at the same timing as the X-rays from the element under analysis.

9. An analysis apparatus as set forth in claim 8, wherein
said first and second WDS spectrometers have first analyzer elements and second analyzer elements, respectively, for spectrally dispersing X-rays,
in said step of producing the X-ray spectrum, said processor produces the X-ray spectrum by moving and controlling the first analyzer elements such that X-rays of wavelengths corresponding to the positions of the first analyzer elements are detected, whereby the X-ray spectrum is produced, and
in said step of obtaining information about the timewise variations of the intensity of the X-rays from the corrective element, the processor positionally fixing and controlling the second analyzer elements such that X-rays from the corrective element are detected, whereby the information about the timewise variations of the intensity of the X-rays from the corrective element is obtained.

10. An analysis apparatus as set forth in claim 8 or 9, wherein in said step of producing the X-ray spectrum, said processor obtains a spectral map in which the X-ray spectrum is stored in association with positions on said sample.

11. An analysis apparatus as set forth in any one of claims 8 to 10, wherein said corrective element is carbon.

12. An analysis apparatus as set forth in claim 11, wherein in said step of correcting the intensity of the X-rays from said element under analysis, said processor corrects attenuation of the intensity of the X-rays from the element under analysis due to carbon, based on the information about the timewise variations of the intensity of the X-rays from the corrective element.

13. An analysis apparatus as set forth in any one of claims 8 to 10, wherein said corrective element is an alkali metal contained in said sample.

14. An analysis apparatus as set forth in claim 13, wherein in said step of correcting the intensity of the X-rays from said element under analysis, said processor finds the concentration of the corrective element based on information about timewise variations of the intensity of the X-rays from the corrective element and corrects the concentration of the element under analysis based on the concentration of the corrective element.
